# EUROPÄISCHE PATENTSCHRIFT

(11) **EP 1 932 067 B1**
(45) Veröffentlichungstag und Bekanntmachung des Hinweises auf die Patenterteilung: **16.12.2009**
(21) Anmeldenummer: 06806032.6
(22) Anmeldetag: 04.10.2006
(51) Int. Cl.: G05B 19/4093, B24B 9/14

(54) **VERFAHREN EINER VORRICHTUNG ZUM RANDBEARBEITEN VON BRILLENGLÄSERN**
METHOD RELATED TO A DEVICE FOR WORKING THE EDGES OF SPECTACLE LENSES
PROCEDE S'APPLICANT A UN DISPOSITIF PERMETTANT L'USINAGE DES BORDS DE VERRES DE LUNETTES

(30) Priorität: 07.10.2005 DE 102005048436
(43) Veröffentlichungstag der Anmeldung: 18.06.2008
(73) Patentinhaber: Buchmann Deutschland GmbH, 40231 Düsseldorf (DE)
(72) Erfinder: KRENGEL, Klaus, 42655 Solingen (DE); SCHILDT, Tobias, 40231 Düsseldorf (DE); NEFF, Matthias, 40764 Langenfeld (DE); BEIL, Sebastian, 40591 Düsseldorf (DE)
(74) Vertreter: Christophersen & Partner
(86) Internationale Anmeldenummer: PCT/EP2006/009595
(87) Internationale Veröffentlichungsnummer: WO 2007/042188

(56) Entgegenhaltungen:
- EP-A2- 0 379 427
- EP-A2- 0 887 720
- DE-A1- 10 013 648

## Beschreibung

Die Erfindung betrifft ein Verfahren einer Vorrichtung zum automatischen Anpassen von entsprechend Bestelldaten hergestellten Rohgläsern in eine vorgegebene Brillenfassung und zum einpassgenauen Randbearbeiten mittels wenigstens einer CNC-gesteuerten, eine Eingabeschnittstelle aufweisenden Brillenglasrandbearbeitungsmaschine mit den Schritten: Eingeben der PD-Werte für das linke und rechte Auge entsprechend den Bestelldaten in einen Rechner, Eingeben der Zentrierhöhe für das linke und rechte Auge entsprechend den Bestelldaten in den Rechner, Eingeben der optischen Werte des linken und rechten Auges entsprechend den Bestelldaten und, falls gegeben, Eingeben der Lage eines Nahteils oder eines Progressionskanals in den Rechner, Eingeben des Rohglasdurchmessers und der Lage des optischen Mittelpunkts und/oder der Rohglasabmessungen bei unrunden Rohgläsern und Eingeben der Lage des optischen Mittelpunktes mit Bezug auf den geometrischen Mittelpunkt bei vordezentrierten kreisrunden oder unrunden Rohgläsern in den Rechner, Eingeben der Formdaten der Fassungsränder der vorgegebenen Brillenfassung in den Rechner, rechnerisches Überlagern der Formdaten der linken und rechten Brillenglasöffnung und des linken und rechten, entsprechend den PD-Werten, der Zentrierhöhe seines jeweiligen optischen Mittelpunkts, der Achsenlage eines zylindrischen und/oder der Basislage eines prismatischen Anteils der optischen Wirkung, sowie, falls gegeben, hinsichtlich der Lage eines Nahteils oder Progressionskanals ausgerichteten Rohglases durch den Rechner, rechnerisches Überprüfen durch den Rechner, ob die Größe der Rohgläser für die Randbearbeitung entsprechend der vorgegebenen Brillenfassung ausreicht.

Derartige Verfahren und die Verwendung der entsprechenden Vorrichtungen sind in der DE 198 04 542 C2, der EP 1 366 857 B1 und der DE 100 13 648 A1 beschrieben.

Die nachstehenden Grundlagen für die optische Brillenanpassung sind im Fachbuch: Dr. Enders, Die Optik des Auges und der Sehhilfen, ISBN 3-9269-36-2, Seiten 4 bis 69, beschrieben.

Für die Brillenglasrandbearbeitung mittels CNC-gesteuerten Brillenglasrandbearbeitungsmaschinen ist es erforderlich, die personenbezogenen Daten und fassungsbezogenen Daten zu berücksichtigen und zu überprüfen. Die personenbezogenen Daten umfassen den Pupillenabstand der Augen des Brillenträgers (PD-Wert), die optischen Werte des linken und rechten Brillenglases sowie, falls gegeben, Angaben über die Lage eines Nahteils oder eines Gleitsichtkanals bei Gleitsichtbrillengläsern. Die fassungsbezogenen Daten umfassen den gesamten oder einzelnen Augenabstand (Zentrierabstand), die Höhenunterschiede der Pupillen des linken und rechten Auges (Höhenzentrierung), den Hornhautscheitelabstand, bezogen auf die ausgewählte Brillenfassung, den Vorneigungswinkel der Brillenfassung und die Fassungsdurchbiegung (Fassungsscheibenwinkel). Zusammenfassend werden die Daten nachfolgend als Bestelldaten bezeichnet.

Anhand dieser Werte und in Verbindung mit den Abmessungen einer ausgewählten Brillenfassung lässt sich der erforderliche Rohglasdurchmesser ermitteln, der für das linke und rechte Brillenglas nicht notwendigerweise gleich sein muss, aber bevorzugt wird.

Bei einfachen Brillengläsern mit geringer Dioptriezahl, bei denen der optische Mittelpunkt mit dem geometrischen Mittelpunkt des Rohglases übereinstimmt, lässt sich in der Regel ein minimaler Rohglasdurchmesser auffinden, der für das Formschleifen der für eine vorgegebene Brillenfassung bestimmten Brillengläser geeignet ist und möglichst wenig Randungsarbeit erfordert. Dieser ergibt bei Plusgläsern auch die geringste Mittendicke. Dies gilt insbesondere dann, wenn die Pupillenabstände der Augen des Brillenträgers zur Brillenfassungsmitte im Wesentlichen gleich sind, der Höhenunterschied zwischen der linken und rechten Pupille sehr gering oder gar nicht vorhanden ist und wenn die Sehstärken der Augen gleich oder wenig unterschiedlich sind. Dies ist der Idealfall, der auch Brillengläser mit idealer Geometrie voraussetzt.

Sollen in große oder breite, modische Brillenfassungen aus Gewichtsgründen mittendickenoptimierte und daher randscharfe Plusgläser mit starker dioptrischer Wirkung eingepasst werden, die zu ungewöhnlichen Dezentrationswerten führen, um möglichst dünne und leichte Brillengläser zu erzielen, müssen häufig Rohgläser verwendet werden, deren optischer Mittelpunkt vom geometrischen Mittelpunkt abweicht, so genannte vordezentrierte Rohgläser, die zusätzlich noch unrund sein können.

Wenn bei diesen Brillengläsern noch unterschiedliche optische Werte für das linke und rechte Glas, unterschiedliche, unsymmetrische Achsenlagen eines zylindrischen oder prismatischen Anteils, unterschiedliche Pupillenabstände von der Brillenfassungsmitte links und rechts und auch noch merkliche Höhenunterschiede zwischen linker und rechter Pupille zusammen kommen, wird es äußerst schwierig, für das linke und rechte Brillenglas den richtigen Rohglasdurchmesser zu bestimmen und sie unter Berücksichtigung der Toleranzen hinsichtlich der vertikalen Fusionsbreite sowie der fusionalen Divergenz- und Konvergenzfähigkeit des Brillenträgers einzupassen.

Der handwerklich tätige Brillenoptiker verfügt zwar über die Erfahrung und das Geschick, einen Kompromiss zwischen den verschiedenen, teilweise widersprüchlichen Anforderungen aufzufinden, jedoch kann er es nicht immer vermeiden, dass das Einpassen missglückt oder Glasbruch eintritt oder keine gute Verträglichkeit der Brille erreicht wird, so dass das Bestreben dahin geht, das ganze Verfahren des Anpassens von entsprechend Bestelldaten hergestellten Brillengläsern an eine vorgegebene Brillenfassung und das einpassgenaue Randbearbeiten zu automatisieren und in Großbetriebe zu verlagern, um auf diese Weise Fehler zu vermeiden und das Einpassen der Brillengläser wirtschaftlicher zu gestalten.

In der EP 0 379 427 A2 sind ein halbautomatisches Verfahren und eine Vorrichtung zum Anpassen von entsprechend Bestelldaten hergestellten Brillengläsern an eine vorgegebene Brillenfassung und zum Randbearbeiten mittels einer CNC-gesteuerten Brillenglasrandbearbeitungsmaschine beschrieben.

Mittels dieses Verfahrens und der entsprechenden Vorrichtung wird ein in einer Brillenglashaltewelle einer Brillenglasrandbearbeitungsmaschine eingespanntes Rohglas beidseitig mittels Fühlern entlang dem der vorgegebenen Brillenfassung entsprechenden Umfang des Fertigglases abgetastet. Laufen diese Fühler aus einem Bereich des Umfangs des eingespannten Rohglases heraus, bedeutet dies, dass das Rohglas in diesem Bereich zu klein ist. Der die Vorrichtung steuernde Rechner ist so programmiert, dass er eine rechnerische Verschiebung der Fertigglaskontur automatisch durchführen kann, derart, dass sie sich vollständig innerhalb des Kreises des Rohglases befindet. Die Größe der rechnerischen Verschiebung wird angezeigt, und die Bedienungsperson entscheidet, ob die Verschiebungsgrößen in Ordnung sind, und, wenn dies der Fall ist, wird der Bearbeitungsvorgang entsprechend den neuen Werten durch Knopfdruck ausgelöst. Dieser Vorgang wird nacheinander für jeweils ein linkes und ein rechtes Brillenglas durchgeführt, ohne dass allerdings die gegebenenfalls durchgeführten Korrekturen in irgendeiner Weise zueinander in Beziehung gesetzt werden. Auch finden sich keine Angaben in diesem Dokument, nach welchen Kriterien die Bediendungsperson beurteilt, ob die Korrekturwerte in Ordnung sind, und die optischen Werte der Brillengläser werden nicht berücksichtigt.

In der DE 41 26 313 A1 ist des Weiteren eine CNC-gesteuerte Brillenglasrandschleifmaschine beschrieben, die eine Messeinrichtung zum Messen des Abstandes zwischen den geometrischen Zentren der Fassungsränder einer vorgegebenen Brillenfassung, eine Eingabeeinrichtung zum Eingeben eines vorher gemessenen Pupillarabstands, eine Berechnungseinrichtung zum Berechnen eines auftretenden oder scheinbaren Einstellbetrags aus der Differenz zwischen dem Pupillarabstand und dem Abstand zwischen den geometrischen Zentren der Brillenglasöffnungen der Brillenfassung und eine Korrektureinrichtung zum Korrigieren des auftretenden oder scheinbaren Einstellbetrags auf Basis der Krümmung der Vorderfläche der zu bearbeitenden Brillengläser, der dreidimensionalen Daten der Brillenfassung und der V-Nut-Kurve oder -Krümmung aufweist. Mit dieser Vorrichtung lassen sich Korrekturen für Brillenfassungen mit großen Abmessungen und einem großen Betrag an Krümmung, Wölbung und der Winkelabweichung in einer senkrechten Ebene korrigieren. Die Messungen werden entweder sowohl an dem linken als auch an dem rechten Fassungsrand der Brillenfassung vorgenommen, oder sie werden nur an einem Fassungsrand mit der Annahme, dass beide Fassungsränder spiegelbildlich kongruent sind, vorgenommen, woraufhin die gemessenen Daten für den anderen Fassungsrand rechnerisch invertiert werden.

Die Daten für das linke und rechte Brillenglas werden nicht miteinander in Beziehung gesetzt, die optischen Werte der Brillengläser werden nicht berücksichtigt, und eine Prüfung, ob der Rohglasdurchmesser ausreicht, um daraus die für die vorgegebene Brillenfassung benötigten Brillengläser herzustellen, wird nicht durchgeführt.

Die Kontrolle, ob der Rohglasdurchmesser für eine gegebene Form des Fertigglases unter Berücksichtigung der Dezentrationswerte und gegebenenfalls unter Einbeziehung von Korrekturen groß genug ist, ist eng verknüpft mit den allgemeinen Forderungen an das Anpassen der Brillengläser an eine vom Brillenträger ausgewählte Brillenfassung.

Generelles Ziel ist es, dass die Durchblickpunkte des Brillenträgers durch die Brillengläser mit den entsprechenden Zentrierbezugspunkten, zum Beispiel dem optischen Mittelpunkt, auf den Brillengläsern zusammenfallen. Die entsprechenden geometrischen Werte sind der Zentrierpunktabstand und die Zentrierhöhe des Brillenträgers. Neben einem optimalen Visus soll eine gute Verträglichkeit der Brille erreicht werden. Werden nämlich die Zentrierbezugspunkte nicht getroffen, entstehen ungewollte prismatische Wirkungen. Diese kann das Gehirn innerhalb bestimmter Grenzen kompensieren. Dabei kann es zu Unverträglichkeiten wie Ermüdung und Kopfschmerzen oder zu Sehstörungen in Form von Doppelbildern kommen, wenn die erzwungene Kompensation durch die Augenstellung nicht erreicht wird. Der Bewegungsapparat der Augen kann bestimmte Bewegungen ausführen, mit denen sich fehlerhafte prismatische Wirkungen kompensieren lassen. So ist die fusionale Konvergenzfähigkeit erheblich größer als die fusionale Divergenzfähigkeit, da sich die Blickachsen der Augen bei Fernsicht höchstens parallel einstellen müssen, aber nie divergieren und bei Nahsicht konvergieren. Dementsprechend lässt sich ein horizontales Außenprisma durch Konvergenz der Sehachsen kompensieren, ein Innenprisma jedoch sehr schlecht, da der Bewegungsapparat keine Divergenz der Sehachsen nach außen einstellen kann.

Des Gleichen lassen sich gleichsinnige vertikale Prismen problemlos kompensieren, da der Bewegungsapparat der Augen die Parallelbewegung der Sehachsen nach oben und unten problemlos durchführt, bei einer gegensinnigen Bewegung der beiden Augen jedoch Schwierigkeiten hat.

Je höher die dioptrische Wirkung der Brillengläser ist, desto kleiner ist die erlaubte Fehlzentrierung, bei fester prismatischer Toleranzgrenze. Daraus ergeben sich die Genauigkeitsanforderungen an das Zentrieren, die umso höher sind, je größer die induzierte, das heißt ungewollte prismatische Wirkung der Brillengläser ist. So sollen gegensinnige vertikale Prismenwirkungen vermieden werden, das heißt, die Zentrierbezugspunkte sollen bei der Zentrierhöhe möglichst genau erreicht werden. Abweichungen der Fehlzentrierung lassen sich bei Minusgläsern weniger nach außen, mehr nach innen, bei Plusgläsern weniger nach innen, mehr nach außen tolerieren.

Der Erfindung liegt die Aufgabe zu Grunde, ein Verfahren sowie die Verwendung einer Vorrichtung zur Durchführung des Verfahrens vorzuschlagen, mit denen sich ein automatisches Anpassen von entsprechend Bestelldaten des jeweiligen Brillenträgers hergestellten Rohgläser an eine vom Brillenträger ausgewählte Brillenfassung unter Einbeziehung der wesentlichen dafür relevanten Kriterien durchführen lassen, um dem Brillenträger eine Brille zur Verfügung zu stellen, die ihm einen optimalen Visus verschafft und eine gute Verträglichkeit gewährleistet. Dabei sollen möglichst viele der entsprechend Bestelldaten hergestellten Rohgläser, insbesondere auch knapp bemessene Rohgläser mit möglichst einfachem mechanischem Aufbau und möglichst geringen Anforderungen an das Rechnerprogramm und die Speicherkapazität zu Brillen verarbeitet werden können.

Ausgehend von diesen Problemen und der Aufgabenstellung wird ein Verfahren zum automatischen Anpassen von entsprechend Bestelldaten hergestellten Rohgläsern an eine vorgegebene Brillenfassung und zum einpassgenauen Randbearbeiten mittels wenigstens einer CNC-gesteuerten, eine Eingabe-Schnittstelle aufweisenden Brillenglasrandbearbeitungsmaschine vorgeschlagen, das erfindungsgemäß aus den folgenden Schritten besteht:
1. Eingeben der PD-Werte für das linke und rechte Auge entsprechend den Bestelldaten in einen Rechner,
2. Eingeben der Zentrierhöhe für das linke und das rechte Auge entsprechend den Bestelldaten in den Rechner,
3. Eingeben der optischen Werte des linken und des rechten Auges entsprechend den Bestelldaten und, falls gegeben, Eingeben der Lage eines Nahteils oder eines Progressionskanals eines Gleitsichtglases in den Rechner,
4. Eingeben des Rohglasdurchmessers und der Lage des optischen Mittelpunkts und/oder der Rohglasabmessungen bei unrunden Rohgläsern und Eingeben der Lage des optischen Mittelpunkts mit Bezug auf den geometrischen Mittelpunkt bei vordezentrierten kreisrunden oder unrunden Rohgläsern in den Rechner,
5. Eingeben der Formdaten der Fassungsränder der vorgegebenen Brillenfassung in den Rechner,
6. rechnerisches Überlagern der Formdaten der linken und rechten Brillenglasöffnungen und des linken und rechten, entsprechend den PD-Werten, der Zentrierhöhe seines jeweiligen optischen Mittelpunkts, der Achsenlage eines zylindrischen und/oder der Basislage eines prismatischen Anteils, der optischen Wirkung, sowie, falls gegeben, hinsichtlich der Lage eines Nahteils oder Progressionskanals ausgerichteten Rohglases durch den Rechner,
7. rechnerisches Überprüfen durch den Rechner, ob die Größe der Rohgläser für die Randbearbeitung entsprechend der vorgegebenen Brillenfassung ausreicht,
8. falls erforderlich, rechnerisches Verschieben des zu kleinen Rohglases mit Bezug auf die Formdaten des jeweiligen Fassungsrandes bis die die Formdaten die betreffenden Fassungsränder vollständig innerhalb des Rohglases liegen, durch den Rechner,
9. rechnerisches Überprüfen durch den Rechner, ob die vorgenommene Verschiebung innerhalb der vorgegebenen, von der prismatischen Wirkung neben dem optischen Mittelpunkt unter Berücksichtigung der Achsenlage der Hauptschnitte eines zylindrischen und/oder prismatischen Anteils abhängigen Toleranzen liegt und, ist dies nicht der Fall, Verwerfen des betreffenden Rohglaspaares, oder, ist dies der Fall,
10. rechnerisches Überprüfen durch den Rechner, ob die vorgenommene Verschiebung des einen Rohglases eine entsprechende, gleichsinnige Verschiebung des anderen Rohglases erfordert, um die vorgegebenen Toleranzen hinsichtlich der vertikalen Fusionsbreite sowie der fusionalen Divergenz- und Konvergenzfähigkeit einzuhalten und, ist dies der Fall,
11. Berechnen der minimal erforderlichen Verschiebung und rechnerisches Überprüfen durch den Rechner, ob die vorgenommene Verschiebung innerhalb der vorgegebenen, von der prismatischen Wirkung neben dem optischen Mittelpunkt unter Berücksichtigung der Achsenlage der Hauptschnitte eines zylindrischen und/oder prismatischen Anteils abhängigen Toleranzen liegt und, ist dies nicht der Fall, Verwerfen des betreffenden Rohglaspaares, oder ist dies der Fall,
12. Ansteuern der Brillenglasbearbeitungsmaschine(n) durch den Rechner zum Formbearbeiten des Brillenglaspaares entsprechend den ermittelten Werten. In diesem Zusammenhang ist unter Eingeben sowohl das Eingeben mittels einer Tastatur als auch das Eingeben mittels Datenübertragung oder Dateneinlesen zu verstehen.

Die Erfindung geht von der Überlegung aus, dass sich eine niedrige Zurückweisungs- bzw. Ausschussquote und ein optimaler Visus sowie eine gute Verträglichkeit für den betreffenden Brillenträger nur dann erreichen lässt, wenn ein anhand der Rezeptwerte in Verbindung mit den Formdaten einer ausgewählten Brillenfassung beim Brillenglashersteller bestelltes Rohglaspaar, das durchmesser- und dickenoptimiert, gegebenenfalls vordezentriert und auch unrund sein kann, jeweils vor der Formbearbeitung gemeinsam und unter gegenseitiger Bezugnahme geprüft wird und gegebenenfalls erforderliche Korrekturen in gegenseitiger Abhängigkeit berechnet werden, da nur so die eingangs erwähnten, sich teilweise widersprechenden und auch nicht immer alle gleichzeitig erfüllbaren Bedingungen innerhalb der vorgegebenen Toleranzen erfüllbar sind.

Wenn die optischen Werte des linken und rechten Rohglases, der optische Mittelpunkt und, falls gegeben, die Lage eines Nahteils oder eines Progressionskanals mittels eines entsprechenden Messgeräts aufgenommen und dem Rechner übermittelt werden, wird damit eine automatische Kontrolle der Bestelldaten und ein automatisches Aufnehmen des optischen Mittelpunktes und, falls gegeben, der Lage eines Nahteils oder eines Progressionskanals erreicht, und die ermittelten Werte gelangen direkt in den Rechner, der dann in der Lage ist, die optimale Achsposition des Glases, bei der sich die Form am besten aus dem Rohglas herausschleifen lässt, zu berechnen. Bei rein sphärischen Gläsern kann die Orientierung beliebig sein, bei zylindrischen Gläsern lässt sich die Form entsprechend dem Achswert nur um 180° drehen.

Zusätzlich lässt sich das Messgerät auch dazu verwenden, den Rohglasdurchmesser und/oder die Rohglasabmessungen aufzunehmen und dem Rechner zu übermitteln, so dass eine manuelle Eingabe dieser Werte nicht erforderlich ist.

Eine rationelle und schnelle Randbearbeitung eines Rohglaspaares lässt sich erreichen, wenn je eine Brillenglasrandbearbeitungsmaschine für die Bearbeitung jeweils eines linken und eines rechten Brillenglases sowie je ein Messgerät zum Aufnehmen der optischen Werte, des optischen Mittelpunkts und, falls gegeben, der Lage eines Nahteils oder eines Progressionskanals, des Rohglasdurchmessers und/oder der Rohglasabmessungen jeweils eines linken und eines rechten Brillenglases verwendet werden. Dabei ist es besonderes vorteilhaft, wenn die Mess- und Bearbeitungsabläufe für ein Rohglaspaar parallel und gleichzeitig ablaufen.

Eine vollständige Automatisierung der Brillenglasrandbearbeitung lässt sich erreichen, wenn wenigstens ein Handhabungsgerät verwendet wird, das die Rohglaspaare von einem Transportsystem aufnimmt, in das Messgerät oder die Messgeräte einlegt, aus dem Messgerät oder aus den Messgeräten entnimmt und zur Bearbeitung in die Brillenglasrandbearbeitungsmaschine(n) einsetzt, wenn das Rohglaspaar für die Randbearbeitung geeignet ist, oder verworfene Brillenglaspaare aussondert und formbearbeitete Brillenglaspaare aus der bzw. den Brillenglasrandbearbeitungsmaschine(n) entnimmt und auf das Transportsystem zurücklegt, wobei im Rechner die zu berücksichtigenden, vorgegebenen Toleranzen hinsichtlich der prismatischen Wirkung neben dem optischen Mittelpunkt unter Berücksichtigung der Achsenlage der Hauptschnitte eines zylindrischen und/oder prismatischen Anteils, der vertikalen Fusionsbreite, der fusionalen Divergenz- und Konvergenzfähigkeit und der Messung des Rohglasdurchmessers und/oder der Rohglasabmessungen sowie der Bewegungen des Handhabungsgeräts bzw. der Handhabungsgeräte beim Einsetzen in die Brillenglasrandbearbeitungsmaschine gespeichert sind und in die Berechnungen und Überprüfungen einfließen.

Auf diese Weise lassen sich die maschinellen Toleranzen des Messgeräts und des Handhabungsgeräts zusätzlich berücksichtigen, insbesondere in der Weise, dass die Messtoleranz des Zentrierpunkts und/oder des Rohglasdurchmessers und/oder der Rohglasabmessungen und/oder die Handhabungstoleranz im Rechner vom ermittelten Rohglasdurchmesser oder dessen Abmessungen subtrahiert oder zu den Radialwerten der Fertigglasdaten addiert werden, wenn das rechnerische Überlagern durchgeführt wird.

Vorzugsweise wird am linken und am rechten Rohglas jeweils ein Block oder Sauger mit der für das jeweilige Rohglas berechneten Zentrierung befestigt, wobei sich das bzw. die Messgeräte dazu verwenden lässt bzw. lassen, wenn es bzw. sie mit dafür geeigneten Einrichtungen ausgestattet wird bzw. werden.

Ebenso ist es möglich, die für das linke und rechte Rohglas berechneten Zentrierdaten direkt in die Randbearbeitungsdaten rechnerisch einzubeziehen. In diesem Fall können entweder das linke und das rechte Rohglas mit einem Block oder Sauger auf dem optischen Mittelpunkt versehen werden, oder das linke und rechte Rohglas werden mittels des Handhabungsgeräts bezüglich des optischen Mittelpunkts lagegenau ohne Verwendung eines Blocks oder Saugers in die Brillenglasrandbearbeitungsmaschine eingesetzt, und dort entsprechend den Randbearbeitungsdaten bearbeitet.

Die Erfindung wird nachstehend anhand zweier in der Zeichnung dargestellter, zur Durchführung des erfindungsgemäßen Verfahrens geeigneter Ausführungsbeispiele des näheren erläutert. In der Zeichnung zeigen:
- Fig. 1: eine schematische Vorderansicht der Anlage,
- Fig. 2: eine schematische Draufsicht der Anlage gemäß Fig. 1,
- Fig. 3: eine schematische Vorderansicht einer zweiten Ausführungsform der Anlage und
- Fig. 4: eine schematische Draufsicht der Anlage gemäß Fig. 3.

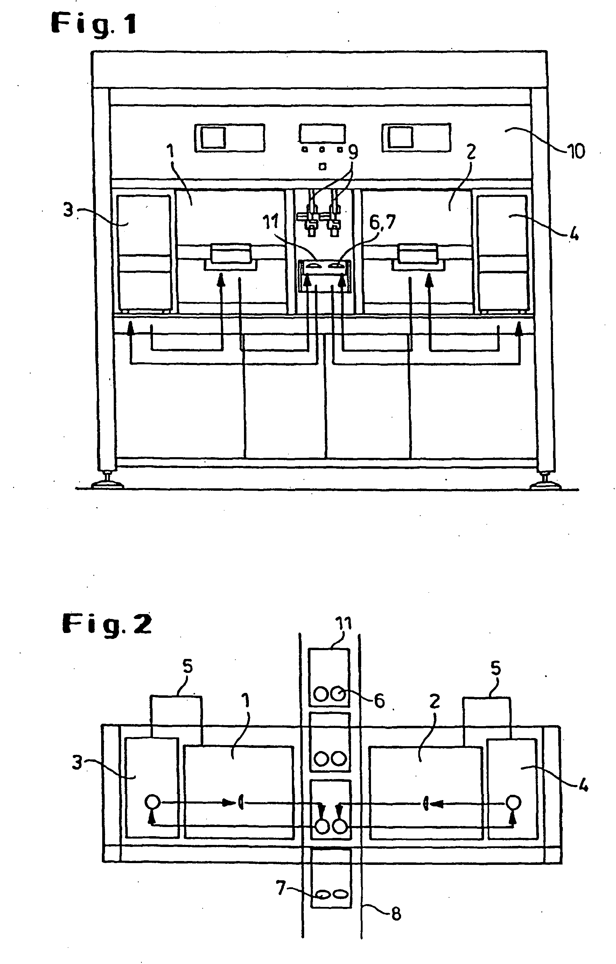

Im in Fig. 1 dargestellten Ausführungsbeispiel sind eine Brillenglasrandbearbeitungsmaschine 1 für ein linkes Brillenglas und eine Brillenglasrandbearbeitungsmaschine 2 für ein rechtes Brillenglas einander gegenüberliegend angeordnet, und ihre Brillenglashaltewellen verlaufen koaxial zueinander.

Bei den Brillenglasrandbearbeitungsmaschinen 1, 2 sind in im Einzelnen nicht dargestellter Weise Brillenglashaltewellen jeweils in Bearbeitungskammern der Brillenglasrandbearbeitungsmaschinen 1 bzw. 2 angeordnet, die mittels jeweils eines Klappdeckels verschließbar sind.

Für die Bearbeitung von Brillengläsern aus Silikatglas werden nicht dargestellte Diamantschleifscheiben eingesetzt, wobei dem Schleifspalt zwischen einem zu bearbeitenden und zwischen den Halbwellen eingeklemmten Rohglas 6 und einer nicht dargestellten Schleifscheibe Kühlflüssigkeit zugeführt wird.

Für die Bearbeitung von Kunststoffgläsern werden hochtourig laufende Fräser oder ebenfalls Schleifscheiben eingesetzt, wobei je nach Art des Kunststoffs die Bearbeitung ebenfalls mit Zufuhr eines Kühlmittels oder trocken erfolgt.

Zwischen den Brillenglasrandbearbeitungsmaschinen 1, 2 ist eine Fördereinrichtung in Form eines Förderbandes 8 angeordnet, dessen Transportrichtung im dargestellten Ausführungsbeispiel senkrecht zu den Achsen einer Brillenglashaltewelle verläuft und zum Antransport von in Transportkästen angeordneten Rohglaspaaren 6 sowie zum Abtransport von Fertigglaspaaren 7 und ausgesonderten Rohglaspaaren dient.

Mittels des Förderbandes 8 wird jeweils ein Transportkasten 11 herantransportiert und kommt im Bereich eines an einer portalartigen Führung 10 verfahrbaren Handhabungsgerätepaares 9 zum Stillstand. Hier wird ein Rohglaspaar 6 von dem Handhabungsgerät 9 aufgenommen und in Vorrichtungen 3, 4 zum Bestimmen des Durchmessers bzw. der Abmessungen, der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Rohglases 6 eingesetzt. Die durch die Vorrichtungen 3, 4 aufgenommenen Werte werden als eine Datenmenge über eine Datenverbindung 5 zu den Brillenglasrandbearbeitungsmaschinen 1, 2 übermittelt. Diese Brillenglasrandbearbeitungs-maschinen 1, 2 sind CNC-gesteuert, stehen miteinander in Datenverbindung und sind in der Lage, die von den Vorrichtungen 3, 4 übermittelten Daten bei der Randbearbeitung der Rohgläser 6 zu berücksichtigen.

Die Rechner der Brillenglasrandbearbeitungsmaschinen 1, 2, in denen die zum jeweiligen Rohglaspaar gehörenden PD-Werte und die Zentrierhöhe für das linke und rechte Auge sowie die Formdaten der Fassungsränder der vorgegebenen Brillenfassung bereits vorhanden sind, führen zunächst ein rechnerisches Überlagern der Formdaten der linken und rechten Fassungsränder und des linken und rechten, entsprechend den PD-Werten, der Zentrierhöhe seines jeweiligen optischen Mittelpunkts, der Achsenlage eines zylindrischen und/oder prismatischen Anteils der optischen Wirkung sowie, falls gegeben, hinsichtlich der Lage eines Nahteils oder eines Progressionskanals ausgerichteten Rohglases durch, mit Überprüfung, ob die Größe der Rohgläser für die Randbearbeitung entsprechend der vorgegebenen Brillenfassung ausreicht. Reicht die Größe der Rohgläser für die Randbearbeitung aus, geht ein entsprechendes Signal an die Handhabungsgeräte 9.

Reicht die Größe des einen oder des anderen oder beider Rohgläser nicht aus, führen die Rechner ein rechnerisches Verschieben des zu kleinen Rohglases durch, bis die betreffende Brillenglasöffnung vollständig innerhalb des Rohglases liegt und prüfen, ob die vorgenommene Verschiebung innerhalb der vorgegebenen, von der prismatischen Wirkung neben dem optischen Mittelpunkt unter Berücksichtigung der Achsenlage der Hauptschnitte eines zylindrischen und/oder prismatischen Anteils abhängigen Toleranzen liegt. Ist dies nur bei einem der Rohgläser nicht der Fall, wird das betreffende Rohglaspaar verworfen und ausgesondert. Liegt die Verschiebung innerhalb der vorgegebenen Toleranzen, wird durch die Rechner eine weitere rechnerische Überprüfung durchgeführt, ob die vorgenommene Verschiebung des einen Rohglases eine entsprechende, gleichsinnige Verschiebung des anderen Rohglases erfordert, um die vorgegebenen Toleranzen hinsichtlich der vertikalen Fusionsbreite sowie der fusionalen Divergenz- und Konvergenzfähigkeit einzuhalten. Ist dies nicht der Fall, ist das Rohglaspaar zur Randbearbeitung bereit. Ist jedoch eine gleichsinnige Verschiebung des zweiten Rohglases erforderlich, wird die minimal erforderliche Verschiebung berechnet, und es wird eine rechnerische Überprüfung vorgenommen, ob die vorgenommene Verschiebung innerhalb der vorgegebenen, von der prismatischen Wirkung neben dem optischen Mittelpunkt unter Berücksichtigung der Achsenlage der Hauptschnitte eines zylindrischen und/oder prismatischen Anteils abhängigen Toleranzen liegt. Liegt diese Verschiebung nicht innerhalb der vorgegebenen Toleranzen, muss das betreffende Rohglaspaar verworfen und ausgesondert werden. Liegt diese Verschiebung innerhalb der vorgegebenen Toleranzen, ist das betreffende Brillenglaspaar in Ordnung und für die Randbearbeitung bereit, was durch Ansteuern der Brillenglasbearbeitungsmaschinen durch den Rechner zum Formbearbeiten des Brillenglaspaares entsprechend den ermittelten Werten, erfolgt.

Wird ein Rohglaspaar verworfen und muss ausgesondert werden, geht ein entsprechendes Signal an die Handhabungsgeräte 9, so dass diese die Rohglaspaare nicht in die Brillenglasrandbearbeitungsmaschine 1, 2 einsetzen, sondern sie unbearbeitet in den jeweiligen Transportkasten 11 zurücksetzen.

In den Rechnern sind die zu berücksichtigenden, vorgegebenen Toleranzen hinsichtlich der prismatischen Wirkung neben dem optischen Mittelpunkt unter Berücksichtung der Achsenlage der Hauptschnitte eines zylindrischen und/oder prismatischen Anteils, der vertikalen Fusionsbreite, der fusionalen Divergenz- und Konvergenzfähigkeit, der Messung der Rohglasdurchmesser und/oder der Rohglasabmessungen sowie der Bewegungen der Handhabungsgeräte 9 beim Einsetzen in die Brillenglasrandschleifmaschinen 1, 2 gespeichert und fließen in die Berechnungen und Überprüfungen ein. Dabei werden die Messtoleranz des optischen Mittelpunkts, des Rohglasdurchmessers und/oder der Rohglasabmessungen sowie die Handhabungstoleranz in der Weise berücksichtigt, dass sie im Rechner vom ermittelten Rohglasdurchmesser oder dessen Abmessungen subtrahiert oder zu den Radialwerten der Fertigglasformen addiert werden, wenn das rechnerische Überlagern durchgeführt wird.

Nach Aufnahme der optischen Werte usw. in den Vorrichtungen 3, 4 greifen die Handhabungsgeräte 9 erneut die Rohgläser und setzen sie in die Brillenglasrandbearbeitungsmaschinen 1, 2 ein, wo sie zu einem linken bzw. rechten Brillenglas 7 formbearbeitet werden.

Nach Beendigung der Bearbeitung werden die Fertiggläser 7 mittels des Handhabungsgerätepaares 9 aus den Brillenglashaltewellen der Brillenglasrandbearbeitungsmaschinen 1, 2 herausgenommen und wieder in den Transportkasten 11 zurückgesetzt. Danach wird das Transportband 8 wieder in Bewegung gesetzt und transportiert den Transportkasten 11 mit den Fertiggläsern 7 in einen Weiterverarbeitungsbereich, wo die Fertiggläser in die dazugehörige Brillenfassung eingesetzt werden.

Im dargestellten Ausführungsbeispiel weisen die Handhabungsgeräte 9 im Einzelnen nicht dargestellte Sauger auf, mit Hilfe derer sie die Rohgläser 6 ergreifen, zwischen die Brillenglashaltewellen setzen und dort festklemmen lassen.

In diesem Fall ist ein lagegenaues Ausrichten und winkelgenaues Einsetzen der Rohgläser 6 in die Brillenglashaltewellen nicht erforderlich, und die Handhabungsgeräte 9 brauchen nur einfache, sich immer wiederholende Bewegungen zu vollführen, da die in den Vorrichtungen 3, 4 zum Bestimmen der optischen Werte usw. aufgenommenen und an die Brillenglasbearbeitungsmaschinen 1, 2 übermittelten Daten Informationen über die Lage der Rohgläser 6 enthalten, die bei der Brillenglasbearbeitung rechnerisch berücksichtigt werden.

Es auch möglich, die Vorrichtungen 3, 4 zum Bestimmen der optischen Werte jeweils mit einer Einrichtung zum lage- und winkelgerechten Aufsetzen eines Blocks oder Saugers auf das Rohglas in Abhängigkeit von den aufgenommenen Daten der Rohgläser zu versehen. In diesem Fall nehmen die Handhabungsgeräte 9 die Rohgläser 6 an den daran befestigten Blöcken oder Saugern in den Vorrichtungen 3, 4 zum Bestimmen der optischen Werte usw. auf und setzen sie achsgenau in die Brillenglashaltewellen. Da die üblichen Blöcke oder Sauger Aufnahmen aufweisen, die zu denen der Brillenglashaltewellen komplementär sind, genügt es, wenn sich die Brillenglashaltewellen beim Zusammenfahren zum Einspannen der mit Blöcken oder Saugern versehenen Rohgläser 6 geringfügig drehen, um in die Aufnahmen einzurasten, wodurch auch die Winkellage der Rohgläser 6 bezüglich der Brillenglashaltewellen festgelegt ist.

Gemäß einer weiteren Ausführungsform kann zwischen den Vorrichtungen 3, 4 zum Bestimmen der optischen Werte usw. und den Handhabungsgeräten 9 eine Datenverbindung vorgesehen sein. Die durch die Vorrichtungen 3, 4 zum Bestimmen der optischen Werte usw. aufgenommenen Daten der Rohgläser 6 werden dann in den Handhabungsgeräten 9 rechnerisch berücksichtigt, um die Rohgläser 6 lage- und winkelgenau in die Bearbeitungsmaschinen 1, 2 einzusetzen.

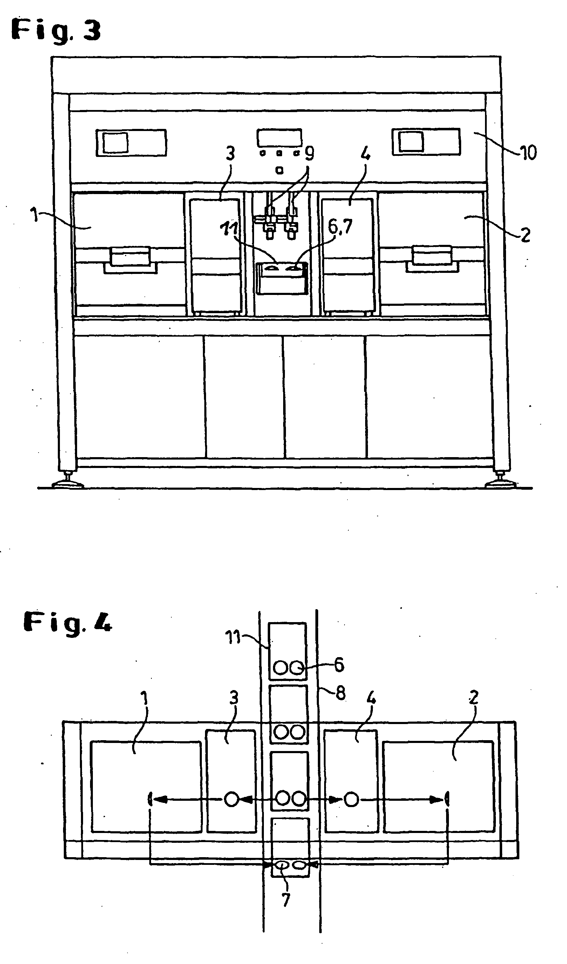

Bei der in den Fig. 3 und 4 dargestellten Ausführungsform sind die Vorrichtungen 3, 4 zum Bestimmen der optischen Werte usw. benachbart zur Fördereinrichtung 8 angeordnet, während bei der Ausführungsform gemäß Fig. 1 und 2 die Bearbeitungsmaschinen 1, 2 benachbart zur Fördereinrichtung 8 angeordnet sind. Der prinzipielle Ablauf verändert sich dadurch nicht.

Bei beiden Ausführungsbeispielen verlaufen die Achsen der Brillenglashaltewellen der beiden Bearbeitungsmaschinen 1, 2 koaxial zueinander, und die Bearbeitungsmaschinen 1, 2 sowie die Vorrichtungen 3, 4 zum Bestimmen der optischen Werte usw. sind im Wesentlichen fluchtend und senkrecht zur Bewegungsrichtung der Fördereinrichtung 8 angeordnet. Es ist jedoch auch möglich, die Bearbeitungsmaschine 1 und die Vorrichtung 3 zum Bestimmen der optischen Werte usw. sowie die Bearbeitungsmaschine 2 und die Vorrichtung 4 zum Bestimmen der optischen Werte usw. um 90° gedreht mit Bezug auf die Fördereinrichtung 8 anzuordnen, so dass die Achsen der Brillenglashaltewellen in den Bearbeitungsmaschinen 1, 2 parallel zur Bewegungsrichtung der Fördereinrichtung 8 liegen.

Das dargestellte Ausführungsbeispiel zeigt eine Doppelmaschinenanordnung zum gleichzeitigen Überprüfen und Bearbeiten von linken und rechten Brillengläsern. Die Erfindung ist hierauf jedoch nicht beschränkt, sondern umfasst auch Ausführungsformen mit nur einer Bearbeitungsmaschine zum Formbearbeiten von Brillengläsern, einem Handhabungsgerät und einer Vorrichtung zum Bestimmen des Durchmessers bzw. der Abmessungen, der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases, wobei diese Vorrichtung entweder mit der Bearbeitungsmaschine über eine Datenleitung in Verbindung steht oder mit einer Einrichtung zum lage- und winkelgerechten Aufsetzen eines Blocks oder Saugers auf das Rohglas in Abhängigkeit von den aufgenommenen Daten des Rohglases versehen ist, so dass das Handhabungsgerät ein einfacher "Pick and Place Roboter" sein kann. In diesem Fall müssen die erfindungsgemäßen Überprüfungen der linken und rechten Rohgläser und das anschließende Randbearbeiten nacheinander durchgeführt werden.

## Patentansprüche

1. Verfahren zum automatischen Anpassen von entsprechend Bestelldaten hergestellten Rohgläsern (6) in eine vorgegebene Brillenfassung und zum einpassgenauen Randbearbeiten mittels wenigstens einer CNC-gesteuerten, eine Eingabe-Schnittstelle aufweisenden Brillenglasrandbearbeitungsmaschine (1) mit den Schritten:
1.1 Eingeben der PD-Werte für das linke und rechte Auge entsprechend den Bestelldaten in einen Rechner,
1.2 Eingeben der Zentrierhöhe für das linke und rechte Auge entsprechend den Bestelldaten in den Rechner,
1.3 Eingeben der optischen Werte des linken und rechten Auges entsprechend den Bestelldaten und, falls gegeben, Eingeben der Lage eines Nahteils oder eines Progressionskanals in den Rechner,
1.4 Eingeben des Rohglasdurchmessers und der Lage des optischen Mittelpunkts und/oder der Rohglasabmessungen bei unrunden Rohgläsern (6) und Eingeben der Lage des optischen Mittelpunktes mit Bezug auf den geometrischen Mittelpunkt bei vordezentrierten kreisrunden oder unrunden Rohgläsern (6) in den Rechner,
1.5 Eingeben der Formdaten der Fassungsränder der vorgegebenen Brillenfassung in den Rechner,
1.6 rechnerisches Überlagern der Formdaten der linken und rechten Brillenglasöffnung und des linken und rechten, entsprechend den PD-Werten, der Zentrierhöhe seines jeweiligen optischen Mittelpunkts, der Achsenlage eines zylindrischen und/oder der Basislage eines prismatischen Anteils der optischen Wirkung, sowie, falls gegeben, hinsichtlich der Lage eines Nahteils oder Progressionskanals ausgerichteten Rohglases (6) durch den Rechner,
1.7 rechnerisches Überprüfen durch den Rechner, ob die Größe der Rohgläser (6) für die Randbearbeitung entsprechend der vorgegebenen Brillenfassung ausreicht, 1.8 falls erforderlich, rechnerisches Verschieben des zu kleinen Rohglases
(6) mit Bezug auf die Formdaten des jeweiligen Fassungsrandes bis die Formdaten des betreffenden Fassungsrandes vollständig innerhalb des Rohglases liegt,
1.9 rechnerisches Überprüfen durch den Rechner, ob die vorgenommene Verschiebung innerhalb der vorgegebenen, von der prismatischen Wirkung neben dem optischen Mittelpunkt unter Berücksichtigung der Achsenlage der Hauptschnitte eines zylindrischen und/oder prismatischen Anteils abhängigen Toleranzen liegt, und, ist dies nicht der Fall, Verwerfen des betreffenden Rohglaspaares (6), oder, ist dies der Fall,
1.10 rechnerisches Überprüfen durch den Rechner, ob die vorgenommene Verschiebung des einen Rohglases (6) eine entsprechende gleichsinnige Verschiebung des anderen Rohglases (6) erfordert, um die vorgegebenen Toleranzen hinsichtlich der vertikalen Fusionsbreite sowie der fusionalen Divergenz- und Konvergenzfähigkeit einzuhalten, und, ist dies der Fall,
1.11 Berechnung der minimal erforderlichen Verschiebung und rechnerisches Überprüfen durch den Rechner, ob die vorgenommene Verschiebung innerhalb der vorgegebenen, von der prismatischen Wirkung neben dem optischen Mittelpunkt unter Berücksichtung der Achsenlage der Hauptschnitte einen zylindrischen und/oder prismatischen Anteils abhängigen Toleranzen liegt und, ist dies nicht der Fall, Verwerfen des betreffenden Rohglaspaares (6), oder, ist dies der Fall,
1.12 Ansteuern der Brillenglasbearbeitungsmaschine(n) (1) durch den Rechner zum Formbearbeiten des Brillenglaspaares (7) entsprechend den ermittelten Werten.

2. Verfahren nach Anspruch 1, bei dem die optischen Werte des linken und rechten Rohglases (6) , des optischen Mittelpunkts, und, falls gegeben, die Lage eines Nahteils oder eines Progressionskanals mittels wenigstens eines entsprechenden Messgeräts (3, 4) aufgenommen und dem Rechner übermittelt werden.

3. Verfahren nach Anspruch 1 oder 2, bei dem der Rohglasdurchmesser und/oder die Rohglasabmessungen, mittels wenigstens eines entsprechenden Messgeräts (3, 4) aufgenommen und dem Rechner übermittelt werden.

4. Verfahren nach Anspruch 1, bei dem die optischen Werte, der optische Mittelpunkt und, falls gegeben, die Lage eines Nahteils oder eines Progressionskanals, der Rohglasdurchmesser und/oder die Rohglasabmessungen des linken und rechten Rohglases mittels wenigstens eines entsprechenden Geräts (3, 4) aufgenommen und dem Rechner übermittelt werden.

5. Verfahren nach Anspruch 4, bei dem je eine Brillenglasrandbearbeitungsmaschine (1) für die gleichzeitige parallele oder zeitlich versetzte Bearbeitung jeweils eines linken und eines rechten Brillenglases (7) sowie je ein Messgerät (3, 4) zum gleichzeitigen parallelen oder zeitlich versetzten Aufnehmen der optischen Werte, des optischen Mittelpunkts und, falls gegeben, der Lage eines Nahteils oder eines Progressionskanals, des Rohglasdurchmessers und/oder der Rohglasabmessungen jeweils eines linken und eines rechten Brillenglases (7) verwendet werden.

6. Verfahren nach Anspruch 4 oder 5, bei dem wenigstens ein Handhabungsgerät (9) verwendet wird, das die Rohglaspaare (6) von einem Transportsystem (8, 11) aufnimmt, in das Messgerät oder die Messgeräte (3, 4) einlegt, aus dem Messgerät oder den Messgeräten (3, 4) entnimmt und zur Bearbeitung in die Brillenglasrandbearbeitungsmaschine(n) (1) einsetzt, wenn sie geeignet sind, oder verworfene Brillenglaspaare (6) aussondert und formbearbeitete Brillenglaspaare (7) aus der bzw. den Brillenglasrandbearbeitungsmaschine(n) (1) entnimmt und auf das Transportsystem (8, 11) zurücklegt, wobei im Rechner die zu berücksichtigenden, vorgegebenen Toleranzen hinsichtlich der prismatischen Wirkung neben dem optischen Mittelpunkt unter Berücksichtigung der Achsenlage der Hauptschnitte eines zylindrischen und/oder prismatischen Anteils, der vertikalen Fusionsbreite, der fusionalen Divergenz- und Konvergenzfähigkeit und der Messung des Rohglasdurchmessers und/oder der Rohglasabmessungen sowie der Bewegungen des Handhabungsgeräts bzw. der Handhabungsgeräte (3, 4) beim Einsetzen in die Brillenglasrandbearbeitungsmaschine (1) gespeichert sind und in die Berechnungen und Überprüfungen einfließen.

7. Verfahren nach Anspruch 6, bei dem die Messtoleranz des optischen Mittelpunkts und/oder des Rohglasdurchmessers und/oder der Rohglasabmessungen und/oder die Handhabungstoleranz in der Weise berücksichtigt werden, dass sie im Rechner vom ermittelten Rohglasdurchmesser oder dessen Abmessungen subtrahiert oder zu den Radialwerten der Fertigglasformen addiert werden, wenn das rechnerische Überlagern durchgeführt wird.

8. Verfahren nach einem der Ansprüche 1 bis 7, bei dem am linken und am rechten Rohglas (6) jeweils ein Block oder Sauger mit der für das jeweilige Rohglas (6) berechneten Zentrierung befestigt wird.

9. Verfahren nach einem der Ansprüche 2 bis 8, bei dem das bzw. die Messgerät(e) (3, 4) dazu verwendet wird bzw. werden, jeweils einen Block oder Sauger am jeweiligen Rohglas (6) mit der dafür berechneten Zentrierung zu befestigen.

10. Verfahren nach einem der Ansprüche 2 bis 8, bei dem die für das linke und rechte Rohglas (6) berechneten Zentrierdaten in die Randbearbeitungsdaten rechnerisch einbezogen werden.

## Claims

1. Process for automatic matching of raw lenses (6), produced in accordance with order data, to a predetermined spectacle frame and for machining the edges to produce an accurate fit, by means of at least one CNC-controlled spectacle lens edge-machining machine (1), which has an input interface, having the following steps:
1.1 the PD values for the left and right eyes are entered into a computer in accordance with the order data,
1.2 the center height for the left and right eyes is entered in the computer in accordance with the order data,
1.3 the optical values of the left and right eyes are entered in the computer in accordance with the order data and, if provided, the position of a reading section or of an intermediate corridor is entered in the computer,
1.4 the raw lens diameter and the position of the optical center point and/or the raw lens dimensions are entered in the computer if the raw lenses (6) are not round, and the position of the optical center point is entered in the computer with reference to the geometric center point for raw lenses (6) which have been decentered in advance, are circular or are not circular,
1.5 the shape data of the frame edges of the predetermined spectacle frame is entered in the computer,
1.6 the shape data of the left and right spectacle lens openings and of the left and right raw lenses (6), which have been aligned in accordance with the PD values, the centering height of their respective optical center point, the axis position of a cylindrical component and/or the base position of a prismatic component of the optical effect, and, if given, with respect to the position of a reading section or of an intermediate corridor, is superimposed by calculation by the computer,
1.7 the computer checks by calculation whether the size of the raw lenses (6) is adequate for edge machining to match the predetermined spectacle frame,
1.8 if necessary, the raw lens (6) which is too small is moved by calculation with respect to the shape data of the respective frame edge until the shape data of the relevant frame edge is completely within the raw lens,
1.9 the computer checks by calculation whether the movement that has been carried out is within the predetermined tolerances, which are dependent on the prismatic effect as well as the optical center point taking into account the axis position of the main cuts of a cylindrical and/or prismatic component, and, if this is not the case, the pair of raw lenses (6) are rejected or, if this is the case:
1.10 the computer checks by calculation whether the movement that has been carried out of one raw lens (6) requires corresponding movement in the same sense of the other raw lens (6) in order to comply with the predetermined tolerances with respect to the vertical fusion width and the fusional divergence and convergence capability, and, if this is the case,
1.11 the computer calculates the minimum required movement and checks by calculation whether the movement that has been carried out is within the predetermined tolerances, which are dependent on the prismatic effect as well as the optical center point, taking into account the axis position of the main cuts of a cylindrical and/or prismatic component and, if this is not the case, the pair of raw lenses (6) are rejected or, if this is the case,
1.12 the spectacle lens-machining machine or machines (1) is or are driven by the computer in order to machine the shape of the pair of spectacle lenses (7) in accordance with the determined values.

2. Process according to Claim 1, in which the optical values of the left and right raw lenses (6), the optical center point and, if given, the position of a reading section or of an intermediate corridor are recorded by means of at least one appropriate instrument (3, 4), and are transmitted to the computer.

3. Process according to Claim 1 or 2, in which the raw lens diameter and/or the raw lens dimensions are/is recorded by means of at least one appropriate instrument (3, 4), and are/is transmitted to the computer.

4. Process according to Claim 1, in which the optical values, the optical center point and, if given, the position of a reading section or of an intermediate corridor, the raw lens diameter and/or the raw lens dimensions of the left and right raw lenses are/is recorded by means of at least one appropriate instrument (3, 4), and are/is transmitted to the computer.

5. Process according to Claim 4, in which in each case one spectacle lens edge-machining machine (1) is used for simultaneous parallel machining, or machining with a time offset, of in each case one left and one right spectacle lens (7), and in each case one instrument (3, 4) is used for simultaneous parallel recording, or recording with a time offset, of the optical values, of the optical center point and, if given, the position of a reading section or of an intermediate corridor, of the raw lens diameter and/or of the raw lens dimensions of in each case one left and one right spectacle lens (7).

6. Process according to Claim 4 or 5, in which at least one handling device (9) is used, which picks up the pairs of raw lenses (6) from a transport system (8, 11), places them in the instrument or the instruments (3, 4), removes them from the instrument or the instruments (3, 4) and inserts them in the spectacle lens edge-machining machine or machines (1) for machining if they are suitable, or segregates rejected pairs of spectacle lenses (6) and removes pairs of spectacle lenses (7) whose shapes have been machined from the spectacle lens edge-machining machine or machines (1) and places them back on the transport system (8, 11), with the predetermined tolerances to be taken into account with respect to the prismatic effect as well as the optical center point being stored in the computer, taking into account the axis position of the main cuts of a cylindrical and/or prismatic component, the vertical fusion width, the fusional divergence and convergence capability and the measurement of the raw lens diameter and/or the raw lens dimensions, as well as the movements of the handling device or of the handling devices (3, 4) on insertion into the spectacle lens edge-machining machine (1), and with this .information being included in the calculations and checks.

7. Process according to Claim 6, in which the measurement tolerance of the optical center point and/or of the raw lens diameter and/or of the raw lens dimensions and/or the handling tolerance are/is taken into account in such a manner that they or it is/are subtracted in the computer from the determined raw lens diameter or its dimensions, or it or they is/are added to the radial values of the finished lens shapes, when the calculation superposition is carried out.

8. Process according to one of Claims 1 to 7, in which a block or sucker with the centering calculated for the respective raw lens (6) is in each case attached to the left and to the right raw lens (6).

9. Process according to one of Claims 2 to 8, in which the instrument or instruments (3, 4) is or are used to attach in each case one block or sucker to the respective raw lens (6), with the centering calculated for this purpose.

10. Process according to one of Claims 2 to 8, in which the centering data calculated for the left and right raw lenses (6) is included by calculation in the edge machining data.

## Revendications

1. Procédé d'adaptation automatique de verres bruts (6) fabriqués selon des données de commande correspondantes, dans une monture de lunettes prédéterminée et pour l'usinage d'adaptation fine des bords au moyen d'au moins une machine d'usinage des bords de verres de lunettes à commande numérique (1) présentant une interface d'introduction des données comportant les étapes suivantes :
1.1 introduire les valeurs des distances entre les pupilles (PD) pour l'oeil gauche et l'oeil droit selon les données de commande dans un ordinateur,
1.2 introduire la hauteur de centrage pour l'oeil gauche et l'oeil droit selon les données de commande dans l'ordinateur,
1.3 introduire les valeurs optiques de l'oeil gauche et de l'oeil droit selon les données de commande et, le cas échéant, introduire la position d'un segment de vue de près ou d'un canal de progression dans l'ordinateur,
1.4 introduire le diamètre du verre brut et la position du centre optique et/ou des dimensions du verre brut dans le cas de verres bruts non ronds (6) et introduire la position du centre optique par rapport au centre géométrique pour des verres bruts (6) préalablement décentrés ou non rond,
1.5 introduire les données de forme des bords de la monture prédéterminée dans l'ordinateur,
1.6 superposer par le calcul, au moyen de l'ordinateur, les données de forme des ouvertures de la monture pour les verres de l'oeil gauche et de l'oeil droit et des verres bruts (6) gauche et droit, en fonction des valeurs PD, de la hauteur de centrage de leur centre optique respectif, de la position de l'axe d'une partie cylindrique et/ou de la position de la base d'une partie prismatique de l'effet optique ainsi que, le cas échéant, la position d'un verre brut (6) selon la position d'un segment de vue de près ou d'un canal progressif.
1.7 vérifier par le calcul, au moyen de l'ordinateur, si la dimension des verres bruts (6) suffit pour l'usinage des bords en fonction de la monture concernée,
1.8 le cas échéant, décaler par le calcul le verre brut trop petit par rapport aux données de forme du bord de monture respectif jusqu'à ce que les données de forme du bord de monture concerné se trouvent entièrement à l'intérieur du verre brut,
1.9 vérifier par le calcul, au moyen de l'ordinateur, si le décalage entrepris se trouve à l'intérieur des tolérances prédéterminées dépendant de l'effet de prisme à côté du centre optique en tenant compte de la position de l'axe des sections principales d'une partie cylindrique et/ou prismatique et, si ce n'est pas le cas, mettre au rebut la paire de verres bruts concernée (6), ou si c'est le cas,
1.10 vérifier par le calcul, au moyen de l'ordinateur, si le décalage entrepris d'un des verres bruts (6) nécessite un décalage dans le même sens de l'autre verre brut (6) pour conserver les tolérances prévues en ce qui concerne la largeur de l'amplitude de fusion verticale ainsi que le pouvoir de divergence et de convergence fusionnelles et, si c'est le cas,
1.11 calculer le décalage minimal nécessaire et vérifier par le calcul, au moyen de l'ordinateur, si le décalage entrepris se trouve à l'intérieur des tolérances prédéterminées dépendant de l'effet de prisme à côté du centre optique en tenant compte de la position de l'axe des sections principales d'une partie cylindrique et/ou prismatique et, si ce n'est pas le cas, mettre au rebut la paire de verres bruts (6) concernée, ou si c'est le cas,
1.12 Commander la ou les machine(s) d'usinage des verres de lunettes (1) par l'ordinateur pour usiner la forme de la paire de verres (7) en fonction des valeurs obtenues.

2. Procédé selon la revendication 1, dans lequel les valeurs optiques des verres bruts (6) droit et gauche, le centre optique et, le cas échéant la position d'un segment de vue de près ou d'un canal de progression sont relevées au moyen d'au moins un appareil de mesure (3, 4) et transmises à l'ordinateur.

3. Procédé selon la revendication 1 ou 2, dans lequel le diamètre du verre brut et/ou les dimensions du verre brut sont relevées par au moins un appareil de mesure (3, 4) et transmis à l'ordinateur.

4. Procédé selon la revendication 1, dans lequel les valeurs optiques du centre optique et, le cas échéant la position d'un segment de vue de près ou d'un canal de progression, le diamètre et/ou les dimensions des verres bruts (6) droit et gauche sont relevées au moyen d'au moins un appareil de mesure (3, 4) et transmises à l'ordinateur.

5. Procédé selon la revendication 4, dans lequel une machine d'usinage des bords de verres de lunettes (1) respective est utilisée pour l'usinage parallèle simultané ou décalé dans le temps d'un verre de lunettes (7) droit ou gauche respectif ainsi que chaque fois un appareil de mesure (3, 4) pour relever parallèlement simultanément ou de façon décalée dans le temps les valeurs optiques, le centre optique et, le cas échéant, la position d'un segment de vue de près ou un canal de progression, le diamètre et/ou les dimensions de chaque fois des verres (7) droit et gauche.

6. Procédé selon la revendication 4 ou 5, dans lequel on utilise au moins un appareil de manipulation (9), qui prélève les paires de verres bruts (6) d'un système de transport (8, 11), les dépose dans le ou les appareil(s) de mesure (3, 4), les retire du ou des appareil(s) de mesure (3, 4) et les dépose dans la ou les machine(s) d'usinage des bords de verres de lunettes (1) pour y être usinés lorsqu'ils sont acceptables ou écarte les paires de verres de lunettes bruts (6) à jeter puis retire les paires de verres de lunettes (7) de la ou des machine(s) d'usinage des bords de verres de lunettes (1) et les remet sur le système de transport (8, 11), étant donné que, dans l'ordinateur, les tolérances prédéterminées à respecter en ce qui concerne l'effet de prisme près du centre optique en tenant compte de la position de l'axe de la section principale d'une partie cylindrique et/ou prismatique, de l'amplitude de fusion verticale, de la divergence et la convergence fusionnelles et de la mesure du diamètre du verre brut et/ou des dimensions des verres bruts ainsi que des mouvements du ou des appareil(s) de manipulation (9) lors de la mise en place dans la ou les machine(s) d'usinage des bords de verres de lunettes (1) sont stockés et entrent en compte dans les calculs et les contrôles.

7. Procédé selon la revendication 6, dans lequel la tolérance de mesure du centre optique et/ou du diamètre du verre brut et/ou des dimensions du verre brut et/ou la tolérance de manipulation sont pris en compte de manière qu'elles soient soustraites ou additionnées dans l'ordinateur du diamètre du verre brut mesuré ou de ses dimensions ou soient ajoutées aux valeurs radiales des formes de verres terminés lorsque la superposition par le calcul a été effectuée.

8. Procédé selon l'une des revendications 1 à 7, dans lequel un bloc ou ventouse est fixé chaque fois, avec le centrage calculé pour le verre brut (6) concerné, sur les verres bruts gauche et droit respectivement.

9. Procédé selon l'une des revendications 2 à 8, dans lequel le ou les appareil(s) de mesure (3, 4) est (sont) utilisé(s) pour fixer chaque fois un bloc ou ventouse sur le verre brut concerné (6) avec le centrage calculé à cet effet.

10. Procédé selon l'une des revendications 2 à 8, dans lequel les données calculées pour le centrage du verre brut droit et gauche sont prises en compte dans le calcul parmi les données d'usinage de bord.
